# EUROPEAN PATENT SPECIFICATION

(11) **EP 2 891 614 B1**
(45) Date of publication and mention of the grant of the patent: **27.04.2016**
(21) Application number: 13832462.9
(22) Date of filing: 14.08.2013
(51) Int. Cl.: B65D 85/804, A47J 31/36

(54) **CAPSULE FOR THE PREPARATION OF A BEVERAGE AND METHOD FOR THE MANUFACTURE OF THE CAPSULE**
KAPSEL ZUR HERSTELLUNG EINES GETRÄNKS UND VERFAHREN ZUR HERSTELLUNG DER KAPSEL
CAPSULE POUR ÉLABORATION DE BOISSON ET PROCÉDÉ DE FABRICATION DE LA CAPSULE

(30) Priority: 28.08.2012 ES 201231336
(43) Date of publication of application: 08.07.2015
(73) Proprietor: Cocatech, S.L.U., 28001 Madrid (ES)
(72) Inventor: FLORES ARNAIZ, Jesús Guillermo, 28001 Madrid (ES); FERNÁNDEZ SAENZ, Pedro, 28001 Madrid (ES)
(74) Representative: Ungria López, Javier
(86) International application number: PCT/ES2013/070597
(87) International publication number: WO 2014/033339

(56) References cited:
- EP-A1- 1 247 756
- EP-A1- 1 555 219
- EP-A1- 1 808 382
- EP-A1- 1 837 294
- EP-A1- 1 864 917
- EP-A1- 1 980 501
- EP-A1- 1 980 501
- EP-A1- 2 236 437
- EP-A1- 2 343 247
- EP-A1- 2 347 976
- WO-A2-2006/016813
- WO-A2-2010/013146
- ES-T3- 2 365 758
- US-A1- 2010 043 646
- US-A1- 2010 043 646
- US-A1- 2010 307 930
- US-A1- 2011 027 425

## Description

### OBJECT OF THE INVENTION

The present invention relates to a capsule comprising a food product inside, in such a way that a fluid is pressure injected to carry out the mixture of said fluid with said food product to obtain said mixture at the outlet of the capsule; and whose object is to provide a new capsule configuration that simplifies the manufacturing method of the same and cheapens its cost.

Another object of the invention is to provide a new manufacturing method for the capsule of the invention.

In general terms, the invention is applicable to capsules containing a food product and in which a fluid is pressure injected to elaborate beverages, more precisely, to obtain infusions, and more specifically, in the elaboration of coffee.

### BACKGROUND OF THE INVENTION

Patent US 3.292.527 can be quoted in the state of the art, which describes an apparatus to prepare and dispense a beverage by means of a capsule containing a product that is perforated in order to apply a liquid, thus obtaining a beverage without entering into contact with the capsule.

Patent document GB 899.055 can also be quoted, which describes a capsule comprising an air chamber in which a fluid is pressure injected to be mixed with a product contained in a chamber of the capsule, in such a way that the fluid is not injected directly on the product, but it is carried out in said air chamber, from which it is applied to the product.

Another background of the invention is constituted by the European patent document under application publication number EP 1.784.344, which describes a capsule that, just like in the previous case, comprises an air chamber in which a fluid is pressure injected that passes on to a chamber containing a product such as a food product through orifices, and the fluid mixes with the food product so that the bottom of the chamber containing the product is deformed and presses against breakage means that produce the breakage and allow the outflow of the fluid mixed with the product through an outlet provided in the capsule. This document also envisages that the bottom of the chamber containing the product comprises a series of weakening lines replacing the breakage means, so that as the pressure in the capsule increases, the passage of the fluid mixed with the product towards the outlet through the weakening lines is permitted. Patent document ES 2365758 T3 should also be quoted, which describes a capsule container in which one of these capsules is inserted in an extractable manner for its manual or automatic use. In this last case, the pressurized liquid presses and fits the internal capsule, but without achieving an appropriate imperviousness in the peripheral fitting area.

Document ES 1052328 U, is known from the same holder, which corresponds to a disposable capsule where we can already observe an internal structure composed by a first injection chamber, formed between its lid and the first filtration disc or membrane, which closes the second chamber containing the food substance on top. Other capsules are disclosed for instance in EP 1980501 and EP 1555219.

Therefore, there is a clear background in the use of capsules that receive pressurized hot water and, after the perforation of their upper lid and distribution of the liquid in a first injection chamber, which homogenizes and controls it, discharge the elaborated beverage through their lower base by percolation.

On the other hand, the use of capsules that incorporate a series of partitions in the form of a labyrinth that slow down the outflow of the fluid mixed with the product to obtain a better homogenization of said mixture before the outflow of the product mixed with the fluid is well known in the state of the art, although in this case, the capsule does not comprise an air chamber.

The invention constitutes an alternative to the aforementioned documents that simplifies the manufacturing method of the capsule and cheapens its cost.

### DESCRIPTION OF THE INVENTION

In order to achieve the aforementioned objectives, the invention has developed a new capsule for the elaboration of beverages as claimed in claim 1, and a manufacturing method for said capsule as claimed in claim 22, where the capsule comprises a first lid through which the pressurized injection of a fluid in a first air chamber is carried out, whose bottom comprises orifices through which the fluid injected is applied to a second chamber containing a product, so that the mixture of the fluid with the food product is carried out. The second chamber includes a bottom equipped with perforations for the passage of the fluid mixed with the food product to a third chamber equipped with partitions in the form of a labyrinth, so that the mixture of the fluid with said product passes through the perforations to the third chamber, where the outflow of the fluid and product mixture is slowed down by means of the partitions in the form of a labyrinth. For that purpose, the third chamber is connected to an outlet of the capsule for the outflow of the fluid mixed with the food product.

The capsule comprises an external container opened by its top side and whose bottom is equipped with a central opening, in correspondence with which an extension defining the outlet is included. The external configuration of said external container is adapted to the bowl of a machine through which the pressure injection of the fluid is carried out to elaborate the beverage.

In addition, the capsule is equipped with a micro-membrane that closes the opening of the bottom of the external container in an airtight manner. The micro-membrane is equipped with notches in its surface to favor its breakage due to the pressure exerted by the injected fluid, so that when the pressure reaches certain value, the breakage of the notches takes place, letting the fluid mixed with the food product pass on towards the outlet. The micro-membrane can be made from aluminum, plastic, a polymer, silicone, textile materials and even an airtight nipple equipped with a pressurized opening valve.

The capsule is also equipped with an internal container forming the second chamber that is opened on its top side to allow the introduction of the food product, and is closed by means of a second lid affixed on the open border of the internal container. Said second lid comprises the orifices for the passage of the injected fluid to be mixed with the product, so that said second lid forms the bottom of the first chamber. In addition, the lateral wall of the internal container presents a configuration that is adapted in a non-movable manner to the internal surface of the external container to which it is affixed, so that the configuration of the lateral wall of the internal container is complementary to the internal surface of the external container, creating a junction that is completely airtight to the passage of fluid, for which a seal is additionally applied at least to the open border of the internal container and the internal surface of the external container, ensuring that the liquid cannot pass through said junction area.

This seal can be obtained by means of any appropriate technique, such as thermo-sealing, thermo-sealing by ultrasound, chemical bond, etc.

The bottom of the internal container and the bottom of the external container form the third chamber that includes the partitions in the form of a labyrinth, for which said partitions are arranged in the external side of the bottom of the internal container, obtaining a single-piece set formed by the internal container and the partitions. In addition, the bottom of the internal container incorporates a set of perforations so that, when provoking the increase of the pressure in its surface due to the pressure injection of the fluid, the passage of the fluid mixed with the food product to the third chamber is produced. As the pressure keeps increasing, the breakage of the micro-membrane is produced, so that said food product mixed with the fluid emerges through the outlet, thus obtaining the elaborated beverage from the injection of the fluid mixed with the product.

This configuration facilitates the manufacturing and assembly of the capsule according to the method to be described below. In addition, the arrangement of the partitions in the form of a labyrinth in the external side of the bottom of the internal container facilitates their assembly on the bottom of the capsule because the third chamber with the partitions in the form of a labyrinth is formed simultaneously when the internal container is introduced into the external container; the introduction of an independent body performing the function of the partitions in the form of a labyrinth, as it occurs in the state of the art, is not required.

The configuration described preserves the food product contained inside the capsule isolated from the outside by means of the airtight closure provided by the upper lid and the micro-membrane, until the moment of the elaboration of the beverage as described above. In addition, the use of the micro-membrane that is broken due to the increase in pressure, prevents the need to include breakage elements of the bottom of the capsule in the capsule to allow the outflow of the fluid mixed with the product, which facilitates the capsule manufacture enormously.

In an embodiment of the invention, the internal container comprises a peripheral rim in which, after filling the internal container with the product, the second lid, constituting the bottom of the first chamber, is affixed. The peripheral rim of the internal container is complementary to a peripheral step provided in the external container, so that said peripheral rim is supported by the peripheral step of the external container, facilitating the positioning and affixing of said internal container in the external container, as described above. The peripheral rim can also be affixed to the peripheral step, while the lateral wall of the internal container is affixed to the internal surface of the external container, achieving an improved affixing and improving its attachment and tightness.

In an embodiment of the invention, the external container comprises capsule-stiffening and supporting radial nerves to provide greater consistency laterally to the extension defining the outlet and from the external surface of the bottom. However, the invention also envisages not including said radial nerves.

In any of the cases, both the stiffening radial nerves and the external profile of the external container, are adapted to the shape of the bowl of the machine to which it is coupled in order to carry out the pressure injection of the fluid.

The partitions provided in the external side of the bottom of the internal container are arranged near the bottom of the external container to allow carrying out the labyrinth functionality homogenizing and slowing down the outflow of the fluid mixed with the food product.

The bottom of the internal container and the bottom of the external container, which define the third chamber, comprise a straight or conical surface or a combination thereof. The conical configuration of both bottoms facilitates the performance and use of the beverage obtained, consisting of the fluid mixed with the food product.

In an embodiment of the invention, the external container comprises an upper conical section constituting the first air chamber, followed by a cylindrical section defining the peripheral step supporting the peripheral rim of the internal container. This way, the internal container forms the second chamber containing the product, which is followed by a small conical chamber forming the third chamber with the partitions in the form of a labyrinth, which it ends by means of the extension defining the outlet; where said extension is constituted by a cylindrical section, that, as described above, can incorporate the capsule-stiffening radial nerves or not.

The partitions of the third chamber are arranged forming a configuration of discontinued concentric circles, whose discontinuities face each other in alternating concentric circles to allow carrying out the labyrinth functionality; however, it may likewise adopt a radial configuration that facilitates the conduction of the fluid mixed with the food product towards the outlet when required.

In an embodiment of the invention, the third chamber increases its height progressively from the outside towards the centre, so that the partitions of said third chamber present a length that decreases from the outside to the inside and whose height increases from the outside to the inside.

Regarding the perforations of the bottom of the internal container, they can be constituted by a set of micro-perforations, such as micro-circles, micro-frusto-conical or micro-frusto-pyramidal.

In addition, the invention envisages that the perforations of the bottom of the internal container are not micro-perforations but are larger, in which case they are sealed by means of a textile membrane with a high thickness index to allow the passage of the fluid mixed with the food product.

The invention envisages that the set of perforations or micro-perforations of the internal container are aligned forming radial lines or forming a grid.

Regarding the set of perforations of the second lid of the internal container, they can be located in the centre of said lid, in an area near the outside, or be distributed along the entire surface.

An embodiment of the invention envisages that the external surface of the capsule comprises a roughness to facilitate the grip and manipulation of the capsule in its location inside the beverage-making machine, by means of which the pressure injection of the fluid is carried out.

In order to carry out the closing of the capsule with the first lid, the external container comprises a peripheral rim in which said first lid is thermo-sealed. This closure is carried out after locating and affixing the internal container inside the external container in a non-moveable manner.

The arrangement of a number of blades provoking a laminar flow for the outflow of the fluid mixed with the food product towards the outlet is envisaged in the interior of the outlet, so that a fluid outflow in the form of a "mouse's tail" is obtained.

The blades can adopt a radial fin configuration, but the possibility of them being constituted by a longitudinal body formed by sections of diametral partitions alternating orthogonally in the vertical direction, whose borders present horizontal extensions in opposite directions at each midpoint of said borders in the form of steps is also envisaged. In any of the cases, these configurations facilitate obtaining the fluid outflow in the form of a "mouse's tail".

In addition, the invention refers to the manufacturing method of a beverage-making capsule according to claim 22, where the method comprises closing the central opening of the bottom of the external container in an airtight manner by means of the micro-membrane and filling the internal container by means of the corresponding product and then closing the open border of the internal container with the second lid. Next, the internal container is introduced into the external container and the internal container is affixed to the external container in a non-movable manner by means of an additional seal, so that the second lid forms the bottom of the first air chamber. Next, the upper side of the external container is closed by means of the first lid in an airtight manner, forming the first air chamber between the first and second lids, leaving the capsule ready to be assembled in the beverage-making machine by means of which a fluid is pressure injected inside the air chamber.

In the case the external container comprises the stiffening and supporting radial nerves and the blades inside the outlet, said external container is manufactured by means of an injection method, obtaining one single piece. It may also be manufactured by means of a thermoforming method, in the case it does not incorporate said radial nerves.

The method of the invention simplifies the manufacture of the capsule by allowing the internal container to be filled with the product and by carrying out its closure with the second lid before said internal container is introduced and affixed inside the external container.

Any appropriate material may be used for the manufacture of the external and internal containers, from polymers, plastic compounds, plasticized cardboard and even metallic materials such as aluminum.
Next, in order to facilitate a better comprehension of this specification, and forming an integral part of the same, a series of figures accompany this specification in which the object of the invention has been represented by way of illustration and not by way of limitation.

### BRIEF DESCRIPTION OF THE FIGURES

Figure 1.- shows an exploded perspective view of an example of an embodiment of the invention.
Figure 2.- shows a sectional view of the previous figure in which the different elements making up the capsule are assembled in its interior.
Figure 3.- shows a perspective lower view of the second container in which the arrangement of the partitions in the form of a labyrinth is clearly observed.
Figure 4.- shows another possible embodiment of the invention, equivalent to what was shown in the previous figures, but with the difference that the external container does not incorporate the capsule-stiffening nerves.
Figure 5.- shows a perspective view of the blades included in the outlet to obtain a fluid in the form of a "mouse's tail".
Figure 6.- shows an example of an embodiment of the blades included in the outlet to obtain a fluid in the form of a "mouse's tail".

### DESCRIPTION OF THE PREFERRED EMBODIMENTS

Next, a description of the invention is made with the help of the previous figures.

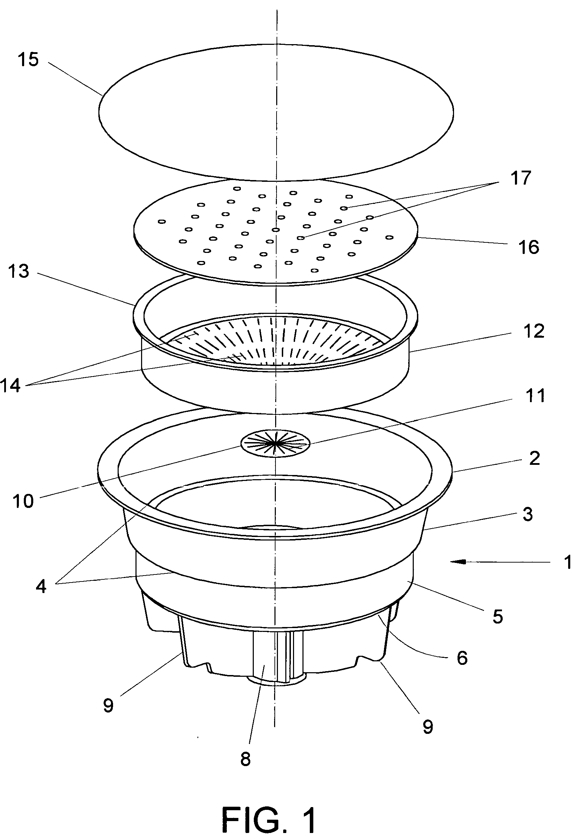

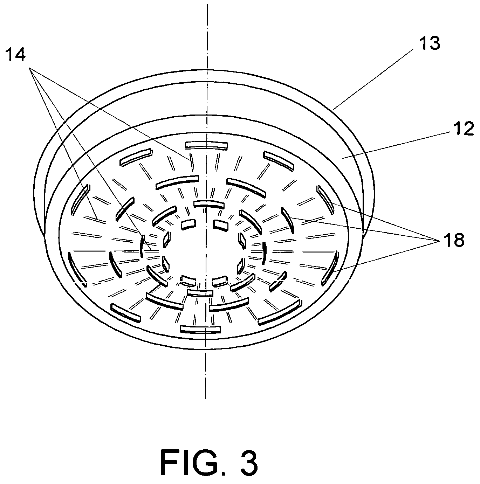

Firstly, an embodiment of the invention is described aided by the figures 1 to 3, where the capsule of the invention comprises an external container 1 opened by its top side, which presents in its nozzle a peripheral rim 2 ending in a conical section 3, which, after a step 4, continues along a cylindrical section 5 that ends at the bottom with a conical bottom 6, equipped with a central opening 7 in correspondence with which an extension defining an outlet 8 is comprised. Laterally to the outlet 8, it incorporates capsule-stiffening radial nerves 9.

The structure of the external container 1 is designed to adapt to the shape of the bowl of the machine to which it is coupled for the elaboration of the beverage, as will be described below.

It should be noted that the conical section 3 has a rough external surface that facilitates the grip of the capsule for its manipulation and introduction into the beverage-making machine. In addition, in the cylindrical part of the external container, a series of rough inscriptions or marks could be housed to indicate the type or brand of the food product housed by the capsule in addition to facilitating the grip.

The central opening 7 is sealed in an airtight manner by means of a micro-membrane 10 equipped with notches 11 that facilitate the breakage of the micro-membrane by increasing the pressure inside the capsule. In addition, the micro-membrane 10 isolates the capsule through its lower part, preserving its content and preventing the oxidation of a food product contained therein for the elaboration of the beverage, allowing said food product to reach the consumer in perfect condition until the moment of its use.

The example of the embodiment envisages that the central opening 7 incorporates a small 0.5 mm-thick surface where said micro-membrane 10 is thermo-sealed in order to allow carrying out the affixing of the micro-membrane 10.
The micro-membrane 10 has a width comprised between 20-50 µm to facilitate its breakage by pressure.

The micro-membrane can be manufactured in very thin aluminum, in any plastic compound, a polymer sheet, silicone, a textile material or even an airtight nipple equipped with a pressurized opening valve.

In addition, the capsule of the invention comprises an internal container 12 opened by its top side incorporating a peripheral rim 13, and whose bottom is equipped with a set of perforations 14 to allow the passage of a fluid pressure injected into the capsule, as will be described below.

The capsule also includes partitions 18 in the external side of the bottom of the internal container forming a single-piece set of the internal container along with the partitions. The width of the partitions 18 is 0.5 mm.

The configuration of the internal container 12 allows filling it with a food product, such as coffee, for example, so that it is compacted inside the internal container 12, and then sealed by means of a second lid 16 equipped with a series of orifices 17. The closing is carried out by placing the border of the second lid 16 on the peripheral rim 13, where it is thermo-sealed.

The lateral wall of the internal container 12 is adapted to the internal surface of the external container, and more specifically, to the cylindrical section 5, so that the peripheral rim 13 is located on the step 4, creating a completely airtight junction to the passage of the fluid, for which a seal is also applied at least to the open border of the internal container and the internal surface of the external container, ensuring that the liquid does not pass through said junction area.

This sealing can be obtained by means of any appropriate technique, such as thermo-sealing, thermo-sealing by ultrasound, chemical bond, etc.

This operation is carried out once the internal container 12 has been filled with the product and closed with the second lid 16. In this position, the partitions 18 are arranged near the bottom 6 of the external container 1. This configuration simplifies the assembly of the capsule.

Next, the capsule is closed with a first lid 15, thermo-sealing it on the peripheral rim 2. The first lid 15 is made from a plastic compound to allow its thermo-sealing to the external container 1.

The space comprised between the first lid 15 and the second lid 16 forms a first air chamber 19, and the set of the internal container with the second lid 16 forms a second chamber 20 containing the product. The space comprised between the bottom 6 of the capsule and the bottom of the internal container 12 defines a third chamber 21 including the partitions 18.

The third chamber 21 presents a height that increases progressively from the outside towards the centre of the capsule, so that the partitions 18 adapt to this configuration.

In the preferred embodiment of the invention, the partitions 18 are arranged forming a configuration determined by discontinued concentric circles, whose discontinuities face each other in alternating concentric circles, so that the length of the partitions decreases from the outside to the inside and whose height increases from the outside to the inside.

The partitions can also be located radially to facilitate the passage of the fluid to the outlet 8 when required.

Once the capsule is assembled, as described above, it is placed in a bowl of a conventional machine of those used for the elaboration of beverages from the described capsule, containing a food product.

Next, the first lid 15 is perforated by means of a needle (or a perforating element), which remains introduced into the first air chamber 19 and a fluid, such as boiling water, is pressure injected, so that the increase in pressure makes it possible for the fluid to pass through the orifices 17 of the second lid 16 closing the internal container 12, so the food product it contains, such as coffee, is soaked, and thanks to the perforations 14 of the internal container 12, it emerges at the third chamber 21, thus favoring the separation of the cream from the coffee, and passing through the labyrinth determined by the partitions 18, which homogenizes the flow towards the outlet 8. In addition, the third chamber enables the cream to be pushed along with the coffee to the outside. The second lid 16 can be stiff or flexible, made from plastic materials, textile materials or aluminum, and its width has to withstand the pressure inside the capsule and the expansion of the ground coffee when it enters into contact with the water. The orifices 17 can be located in the centre, the external extremity or uniformly distributed on the surface, depending on the direction desired to be given to the flow of water inside the capsule.

The micro-membrane 10 is arranged just before accessing the outlet 8, so that as the pressure increases, its breakage is produced, favored by the arrangement of the notches 11 as described above, so that once the micro-membrane 10 is broken, the beverage is directed through the outlet 8, obtaining a constant and homogenous flow.

The perforations 14 can operate with several types of geometries, in this case 0.4 x 0.05 mm micro-slots were chosen; but they can be larger or smaller perforations, with a circular or frusto-conical geometry. In addition, there can be the case of large perforations sealed by a very thick textile membrane, which would act as a filter and an element separating the cream from the coffee.

As mentioned above, both the geometry and the dimensions of the number of perforations 14 can be adapted to the needs required in each case. In the present case lines with approximately 12 slots and an approximate total of 50 lines were provided; obtaining an approximate outlet surface of 12 mm². This area must be small in order to provoke an increase in the pressure of this surface, thus improving the separation process of the cream and the coffee.

The perforations 17 of the second lid 16 can vary in size as desired so the water soaks more quickly or fails to do so, and be located in the centre, the external extremity or uniformly distributed on the surface, depending on the direction desired to be given to the flow of water inside the second chamber 20.

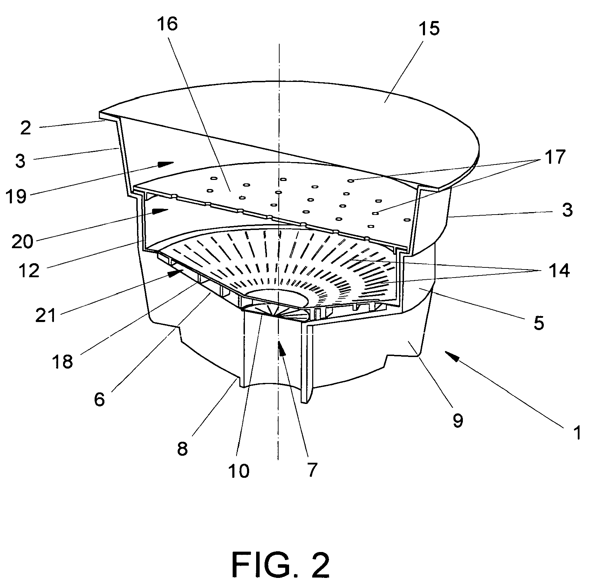

The container represented in figures 1 and 2 is manufactured by injection so that a single piece with the radial nerves 9 is obtained.

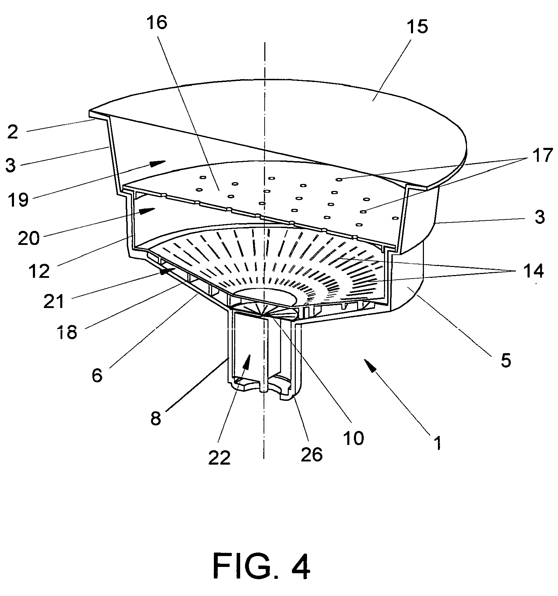

Figure 4 shows another embodiment of the invention equivalent to the one described in figures 1 to 3, but with the difference in this case that the external container 1 does not incorporate the radial nerves 9.

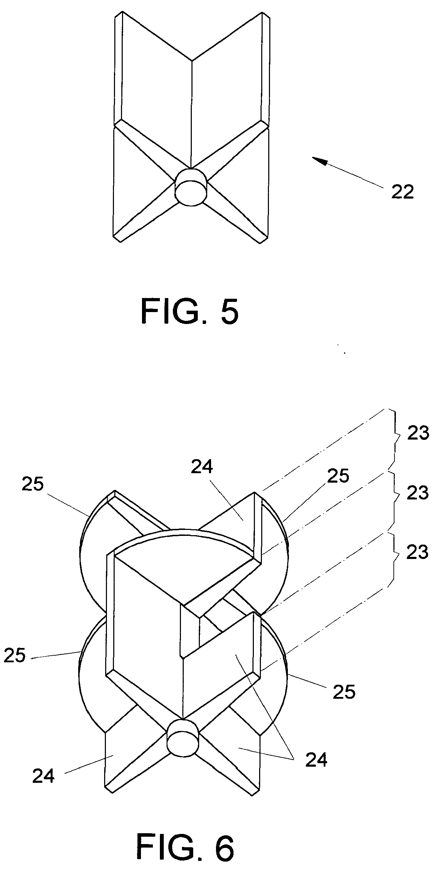

On the other hand, it should be noted that the outlet 8 could incorporate blades 22, such as the radial fins 22 shown in figure 5, for example, which can be supported by an internal step, provided for the purpose, of the outlet 8, or they may likewise be adhered by heat to the same, forming one single piece. The fact that this element is free does not affect its effectiveness of use, since the capsule is always in a vertical position at the moment of use, therefore the blades will fall to their working position due to gravity. In the case of the figures 1 and 2, manufactured by injection, the blades 22 form one single piece with the external container 1.

The outlet (8) also presents a small peripheral step (26) in its external edge for its appropriate coupling and stabilization in the border of the lower orifice of the bowl in the corresponding machine. The height of the radial fins 22 depends on the length of the outlet, and it may oscillate among values comprised between 9 and 15 mm.

Figure 6 shows another possible embodiment of the blades, which in this case are constituted by sections 23 of diametral partitions 24, alternating orthogonally in the vertical direction, whose borders present horizontal extensions 25 in opposite directions at each midpoint of said borders, in the form of steps.

The object of the configuration of the described blades is to provide an outflow to the fluid in the form of a "mouse's tail".

In the example of figure 4, the external container 1 is manufactured by thermoforming, obtaining considerable savings in time and plastic and therefore savings in the price of the piece.

## Claims

1. Beverage-making capsule comprising a first lid (15) through which a fluid is pressure injected in a first air chamber (19), whose bottom comprises orifices (17) through which is applied the fluid injected to a second chamber (20), containing a food product, and said fluid mixes with the food product and the second chamber has a bottom equipped with perforations (14) for the passage of the fluid mixed with the food product to a third chamber (21) equipped with the partitions (18) in the form of a labyrinth to slow down the outflow of the mixture of the fluid with said food product; comprising next to said chamber, an outlet (8) for the mixture of the fluid with the food product; **characterized in that** it comprises:
- an external container (1) opened by its top side and whose bottom (6) is equipped with a central opening (7) in correspondence with which an extension defining the outlet (8) is comprised, and whose external configuration is adapted to the bowl of a beverage-making machine;
- a micro-membrane (10) that closes the opening (7) of the bottom (6) of the external container (1) in an airtight manner, and said micro-membrane (10) comprises notches (11) in its surface to favor its breakage due to the pressure of the injected fluid, allowing thus the passage of the fluid mixed with the food product towards the outlet (8);
- an internal container (12) forming the second chamber (20), which is opened on its top side, where the food product is introduced and is closed by means of a second lid (16), affixed to the open border of the internal container (12); and said second lid (16) has orifices (17) for the passage of the injected fluid to form the bottom of the first chamber (19), and whose lateral wall of said internal container (12) is adapted to the internal surface of the external container (1) in which it is affixed in an airtight and non-movable manner.
- where the bottom of the internal container (12) and the bottom (6) of the external container (1) form a third chamber (21) with the partitions (18) in the form of a labyrinth; and
- where said partitions (18) in the form of a labyrinth are arranged in the external side of the bottom of the internal container (12); obtaining a single-piece set formed by the internal container along with the partitions (18), and said bottom of said internal container (12) has a plurality of perforations (14) to provoke the increase in the pressure on its surface, and allowing the passage of the fluid mixed with the food product to the third chamber (21), where the breakage of the micro-membrane (10) is produced by increasing the pressure.

2. Beverage-making capsule according to claim 1, **characterized in that** the internal container (12) comprises a peripheral rim (13) to which the second lid (16) is affixed, constituting the bottom of the first chamber (19) after filling the internal container (12) with the food product; and said external container (1) has a peripheral step (4) supporting said peripheral rim (13) of the internal container (12) to which the second lid (16) is affixed.

3. Beverage-making capsule according to claim 1, **characterized in that** the external container (1) comprises capsule-stiffening and support radial nerves (9), laterally to the extension defining the outlet (8) and from the external surface of the bottom, which are adapted to the shape of the bowl of the machine to which is it coupled.

4. Beverage-making capsule according to claim 1, **characterized in that** the partitions (18) provided in the external side of the bottom of the internal container (12) are arranged near the bottom of the external container (1).

5. Beverage-making capsule according to claim 1, **characterized in that** the bottom of the internal container (12) and the bottom of the external container (1), defining the third chamber (21), comprise a surface selected among straight, conical and a combination thereof.

6. Beverage-making capsule according to claims 2 or 3, **characterized in that** the external container (1) comprises an upper conical section (3) constituting the first air chamber (19), followed by a cylindrical section (5) defining the peripheral step (4) supporting the peripheral rim (13) of the internal container (12), followed by a small conical chamber forming the third chamber (21), equipped with the partitions (18) in the form of a labyrinth, which ends in the extension defining the outlet (8), being said extension constituted by a cylindrical section.

7. Beverage-making capsule according to claim 5, **characterized in that** the third chamber (21) progressively increases in height from the outside to the inside.

8. Beverage-making capsule according to claim 1, **characterized in that** the partitions (18) are arranged by forming a configuration selected from discontinued concentric circles, whose discontinuities face each other in alternating concentric circles; and a radial configuration.

9. Beverage-making capsule according to claims 5 and 8, **characterized in that** the length of the partitions (18) decreases from the outside to the inside and whose height increases from the outside to the inside.

10. Beverage-making capsule according to claim 1, **characterized in that** the perforations (14) of the bottom of the internal container (12) comprise a set of micro-perforations in a configuration selected among micro-circles, micro-frusto-conical and micro-frusto-pyramidal and micro-slots.

11. Beverage-making capsule according to claim 1, **characterized in that** the perforations in the bottom of the internal container (12) are sealed by means of a textile membrane with a high thickness index.

12. Beverage-making capsule according to claims 10 or 11, **characterized in that** the set of perforations (14) or micro-perforations of the bottom of the internal container (12) are aligned in radial lines or forming a grid.

13. Beverage-making capsule according to claim 1, **characterized in that** the set of perforations (17) of the second lid (16) of the internal container (12) are arranged in a position selected between the centre, the area near the outside and distributed on its surface.

14. Beverage-making capsule according to claim 1, **characterized in that** the micro-membrane (10) is made from a material selected among aluminum, plastic, a polymer, silicone, a textile material and an airtight nipple with a pressurized opening valve.

15. Beverage-making capsule according to claim 1, **characterized in that** the external surface of the capsule comprises a roughness or marks that facilitate the grip.

16. Beverage-making capsule according to claim 1, **characterized in that** the external container (1) comprises a peripheral rim (2) in which the first lid (15) is thermo-sealed.

17. Beverage-making capsule according to claim 1, **characterized in that** the interior of the outlet (8) comprises blades (22) provoking a laminar flow of the fluid towards the outside of the outlet in the form of a "mouse's tail".

18. Beverage-making capsule according to claim 17, **characterized in that** the blades (22) present a configuration selected between radial fins (22) and sections (23) of diametral partitions (24) alternating orthogonally in the vertical direction, whose borders present horizontal extensions (25) in opposite directions at each midpoint of said borders, in the form of steps.

19. Beverage-making capsule according to claim 17, **characterized in that** the blades (22) form one single piece with the outlet (8).

20. Beverage-making capsule according to claim 1, **characterized in that** the outlet (8) presents a small peripheral step (26) in its external edge for its appropriate coupling and stabilization at the border of the lower orifice of the bowl of the corresponding machine.

21. Beverage-making capsule according to claim 1, **characterized in that** the material used for its manufacture is selected among polymers, plastic compounds, plasticized cardboard, metallic materials or a combination thereof.

22. Manufacturing method for a beverage-making capsule according to any one of claims 1 to 18, in which the elaboration of the beverage comprises pressure injecting a fluid into a first air chamber (19) through a first lid (15) of the capsule, whose bottom of the first chamber (19) comprises orifices (17) through which the fluid injected is applied to a second chamber (20) containing a food product, and said fluid mixes with the food product in said second chamber (20); and said second chamber (20) has a bottom equipped with perforations (14) for the passage of the fluid mixed with said food product to a third chamber (21), equipped with partitions (18) in the form of a labyrinth to slow down the outflow of the mixture of the fluid with the food product; comprising after said third chamber (21) an outlet (8) for the mixture of the fluid with the food product; **characterized in that** the manufacture method comprises:
- closing a central opening (7) of the bottom of an external container (1) in an airtight manner by means of a micro-membrane (10) to carry out the airtight closure of the outlet (8);
- filling an internal container (12), which forms the second chamber (20) by means of a product;
- closing the open border of said internal container (12) by means of a second lid (16), and said second lid (16) has orifices (17) for the passage of the injected fluid;
- introducing the internal container (12) into the external container (1), whose lateral wall of said internal container (12) adapts to the internal surface of the external container (1);
- affixing the internal container (12) in an airtight and non-movable manner by means of an additional seal inside the external container (1), forming the second lid (16) the bottom of the first air chamber (19);
- closing the upper side of the external container (1) by means of the first lid (15) in an airtight manner.

23. Manufacturing method for a beverage-making capsule, according to claim 22, **characterized in that** the external container (1) is manufactured by means of a method selected between thermoforming and injection.

## Patentansprüche

1. Getränkeherstellungskapsel, umfassend einen ersten Deckel (15), durch den ein Fluid durch Druck in eine erste Kammer (19) eingespritzt wird, deren Boden Öffnungen (17) umfasst, durch die das Fluid appliziert wird, das in eine zweite Kammer (20) injiziert wird, die ein Nahrungsmittelerzeugnis enthält, wobei sich das Fluid mit dem Nahrungsmittelerzeugnis mischt und die zweite Kammer einen Boden hat, der mit Perforationen (14) für den Durchgang des Fluids, das mit dem Nahrungsmittelerzeugnis gemischt ist, zu einer dritten Kammer (21) hat, die mit den Abtrennungen (18) in Gestalt eines Labyrinthes ausgestattet ist, um den Ausfluss des Gemisches aus dem Fluid und dem Nahrungsmittelerzeugnis abzubremsen; umfassend einen Auslass (8) in der Nähe der Kammer für das Gemisch aus dem Fluid und dem Nahrungsmittelerzeugnis; **dadurch gekennzeichnet, dass** sie umfasst:
- einen Außenbehälter (1), der durch seine Oberseite geöffnet ist und dessen Boden (6) mit einer zentralen Öffnung (7) in Entsprechung mit einer Erweiterung ausgestattet ist, die den Auslass (8) definiert, und dessen äußere Beschaffenheit an die Schüssel der Getränkeherstellungsmaschine angepasst ist;
- eine Mikro-Membran (10), die die Öffnung (7) des Bodens (6) des Außenbehälters (1) luftdicht verschließt, wobei die Mikro-Membran (10) Kerben (11) in ihrer Oberfläche umfasst, um ihren Bruch infolge des Drucks des eingespritzten Fluids zu begünstigen, wodurch der Durchgang des Fluids, das mit dem Nahrungsmittelerzeugnis gemischt ist, zu dem Auslass (8) gestattet wird;
- einen Innenbehälter (12), der die zweite Kammer (20) bildet und der auf seiner Oberseite geöffnet ist, wo das Nahrungsmittelerzeugnis eingeleitet wird, und der mit Hilfe des zweiten Deckels (16) geschlossen ist, der an der oberen Grenze des Innenbehälters (12) befestigt ist; wobei der zweite Deckel (16) Öffnungen (17) für den Durchgang des eingespritzten Fluids hat, um den Boden der ersten Kammer (19) zu bilden, und dessen Seitenwand des Innenbehälters (12) an die Innenoberfläche des Außenbehälters (1) angepasst ist, in dem er luftdicht und unbeweglich befestigt ist;
- wobei der Boden des Innenbehälters (12) und der Boden (6) des Außenbehälters (1) eine dritte Kammer (12) mit den Abtrennungen (18) in Gestalt eines Labyrinthes bilden; und
- die Abtrennungen (18) in Gestalt eines Labyrinthes auf der Außenseite des Bodens des Innenbehälters (12) angeordnet sind; wodurch man einen einstückigen Satz erhält, der durch den Innenbehälter zusammen mit den Abtrennungen (18) ausgebildet ist, und der Boden des Innenbehälters (12) eine Vielzahl von Perforationen (14) hat, um den Anstieg des Drucks auf seiner Oberfläche zu erzwingen und den Durchgang des Fluids, das mit dem Nahrungsmittelerzeugnis gemischt ist, zu der dritten Kammer (21) zuzulassen, wobei das Brechen der Mikromembran (10) durch erhöhen des Drucks erzeugt wird.

2. Getränkeherstellungskapsel nach Anspruch 1, **dadurch gekennzeichnet, dass** der Innenbehälter (12) einen Umfangsrand (13) umfasst, an dem der zweite Deckel (16) befestigt ist, der den Boden der ersten Kammer (19) nach dem Befüllen des Innenbehälters (12) mit dem Lebensmittelerzeugnis bildet, wobei der Außenbehälter (1) eine in Umfangsrichtung verlaufende Abstufung (4) hat, die den Umfangsrand (13) des Innenbehälters (12) stützt, an dem der zweite Deckel (16) befestigt ist.

3. Getränkeherstellungskapsel nach Anspruch 1, **dadurch gekennzeichnet, dass** der Außenbehälter (1) kapselversteifende und radiale Stützverstärkungen (9) hat, die seitlich der Erweiterung angeordnet sind, die den Auslass (8) bildet, und die Außenoberfläche des Bodens ausbilden und an die Form der Schüssel der Maschine angepasst sind, mit der sie verbunden ist.

4. Getränkeherstellungskapsel nach Anspruch 1, **dadurch gekennzeichnet, dass** die Abtrennungen (18), die auf der Außenseite des Bodens des Innenbehälters (12) vorgesehen sind, in der Nähe des Bodens des Außenbehälters (1) angeordnet sind.

5. Getränkeherstellungskapsel nach Anspruch 1, **dadurch gekennzeichnet, dass** der Boden des Innenbehälters (12) und der Boden des Außenbehälters (1), die die dritte Kammer (21) bilden, eine Oberfläche umfassen, die gerade oder konisch ist oder aus einer Kombination aus diesen besteht.

6. Getränkeherstellungskapsel nach Anspruch 2 oder 3, **dadurch gekennzeichnet, dass** der Außenbehälter (1) einen oberen konischen Abschnitt (3), der die erste Luftkammer (19) bildet, gefolgt von einem zylindrischen Abschnitt (5), der die in Umfangsrichtung verlaufende Abstufung (4), die den Umfangsrand (13) des Innenbehälters (12) stützt, gefolgt von einer kleinen konischen Kammer umfasst, die die dritte Kammer (21) bildet, die mit den Abtrennungen (18) in Gestalt eine Labyrinthes ausgestattet ist und in der Erweiterung endet, die den Auslass (8) bildet, wobei dies die Erweiterung ist, die aus einem zylindrischen Abschnitt besteht.

7. Getränkeherstellungskapsel nach Anspruch 5, **dadurch gekennzeichnet, dass** die dritte Kammer (21) von außen nach innen in der Höhe allmählich zunimmt.

8. Getränkeherstellungskapsel nach Anspruch 1, **dadurch gekennzeichnet, dass** die Abtrennungen (18) derart angeordnet sind, dass sie eine Konfiguration bilden, die aus unterbrochenen konzentrischen Kreisen, deren Unterbrechungen in alternierenden konzentrischen Kreisen einander zugewandt sind, und einer radialen Konfiguration gewählt ist.

9. Getränkeherstellungskapsel nach den Ansprüchen 5 und 8, **dadurch gekennzeichnet, dass** die Länge der Abtrennungen (18) von außen nach innen abnimmt und deren Höhe von außen nach innen zunimmt.

10. Getränkeherstellungskapsel nach Anspruch 1, **dadurch gekennzeichnet, dass** die Perforationen (14) des Bodens des Innenbehälters (12) einen Satz von Mikro-Perforationen in einer Konfiguration umfassen, die aus Mikro-Kreisen, mikro-kegelstumpfartigen und mikro-pyramidenstumpfartigen Schlitzen sowie Mikro-Schlitzen gewählt ist.

11. Getränkeherstellungskapsel nach Anspruch 1, **dadurch gekennzeichnet, dass** die Perforationen in dem Boden des Innenbehälters (12) mit Hilfe einer Textilmembran mit einem hohen Dickenindex verschlossen sind.

12. Getränkeherstellungskapsel nach Anspruch 10 oder 11, **dadurch gekennzeichnet, dass** der Satz von Perforationen (14) oder Mikro-Perforationen des Bodens des Innenbehälters (12) in radialen Linien ausgerichtet ist oder ein Raster bildet.

13. Getränkeherstellungskapsel nach Anspruch 1, **dadurch gekennzeichnet, dass** der Satz von Perforationen (17) des zweiten Deckels (16) des Innenbehälters (12) in einer Position angeordnet ist, die zwischen dem Zentrum, dem Bereich in der Nähe der Außenseite und auf dessen Oberfläche verteilt gewählt ist.

14. Getränkeherstellungskapsel nach Anspruch 1, **dadurch gekennzeichnet, dass** die Mikro-Membran (10) aus einem Material besteht, das aus Aluminium, Kunststoff, einem Polymer, Silikon, einem Textilmaterial und einem luftdichten Rohrstutzen mit einem Drucköffnungsventil gewählt ist.

15. Getränkeherstellungskapsel nach Anspruch 1, **dadurch gekennzeichnet, dass** die Außenoberfläche der Kapsel eine Rauhigkeit oder Markierungen umfasst, die ein Greifen erleichtern.

16. Getränkeherstellungskapsel nach Anspruch 1, **dadurch gekennzeichnet, dass** der Außenbehälter (1) einen Umfangsrand (2) umfasst, in dem der erste Deckel (15) thermisch verschweißt ist.

17. Getränkeherstellungskapsel nach Anspruch 1, **dadurch gekennzeichnet, dass** das Innere des Auslasses (8) Leitbleche (22), die einen laminaren Fluss des Fluids zu der Außenseite des Auslasses hervorrufen, in Gestalt eines "Mäuseschwanzes" umfasst.

18. Getränkeherstellungskapsel nach Anspruch 17, **dadurch gekennzeichnet, dass** die Leitbleche (22) eine Konfiguration aufweisen, die zwischen radialen Rippen (22) und Abschnitten (23) diametraler Abtrennungen (24) gewählt sind, die sich orthogonal in der vertikalen Richtung abwechseln, deren Grenzen horizontale Erweiterungen (25) in gegenüberliegenden Richtungen an jedem Mittelpunkt der Grenzen in Gestalt von Abstufungen aufweisen.

19. Getränkeherstellungskapsel nach Anspruch 17, **dadurch gekennzeichnet, dass** die Leitbleche (22) ein einziges Stück mit dem Auslass (8) bilden.

20. Getränkeherstellungskapsel nach Anspruch 1, **dadurch gekennzeichnet, dass** der Auslass (8) eine kleine in Umfangsrichtung verlaufende Abstufung (26) in seinem Außenrand für dessen geeignete Verbindung und Stabilisierung an der Grenze der unteren Öffnung der Schüssel der entsprechenden Maschine aufweist.

21. Getränkeherstellungskapsel nach Anspruch 1, **dadurch gekennzeichnet, dass** das Material, das für deren Herstellung verwendet wird, aus Polymeren, Kunststoffverbindungen, plastifiziertem Karton, Metallmaterialien oder einer Kombination aus diesen gewählt ist.

22. Herstellungsverfahren für eine Getränkeherstellungskapsel nach einem der Ansprüche 1 bis 18, wobei die Herstellung des Getränks das Druckeinspritzen eines Fluids in einer erste Luftkammer (19) durch einen ersten Deckel (15) der Kapsel umfasst, wobei der Boden der ersten Kammer (19) Öffnungen (17) umfasst, durch die das eingespritzte Fluid einer zweiten Kammer (20) zugeführt wird, die ein Nahrungsmittelerzeugnis enthält, und sich das Fluid mit dem Nahrungsmittel in der zweiten Kammer (20) mischt; und die zweite Kammer (20) einen Boden hat, der mit Perforationen (14) für den Durchgang des Fluides, das mit dem Nahrungsmittelerzeugnis gemischt ist, zu einer dritten Kammer (21) ausgestattet ist, die mit Abtrennungen (18) in Gestalt eines Labyrinthes ausgestattet ist, um den Ausfluss des Gemisches des Fluids mit dem Nahrungsmittelerzeugnis zu verlangsamen; umfassend nach der dritten Kammer (21) einen Auslass (8) für das Gemisch aus dem Fluid und dem Nahrungsmittelerzeugnis, **dadurch gekennzeichnet, dass** das Herstellungsverfahren umfasst:
- luftdichtes Verschließen einer zentralen Öffnung (7) des Bodens eines Außenbehälters (1) mit Hilfe einer Mikro-Membran (10), um den luftdichten Verschluss des Auslasses (8) auszuführen;
- Befüllen des Innenbehälters (12), der die zweite Kammer (20) bildet, mit Hilfe eines Erzeugnisses;
- Verschließen der offenen Grenze des Innenbehälters (12) mit Hilfe eines zweiten Deckels (16), wobei der zweite Deckel (16) Öffnungen (17) für den Durchgang des eingespritzten Fluids hat;
- Einfügen des Innenbehälters (12) in den Außenbehälter (1), wobei sich die Seitenwand des Innenbehälters (12) an die Innenfläche des Außenbehälters (1) anpasst;
- Befestigen des Innenbehälters (12) in luftdichter und unbeweglicher Weise mit Hilfe einer zusätzlichen Dichtung innerhalb des Außenbehälters (1), wobei der zweite Deckel (16) den Boden der ersten Kammer (19) ausbildet;
- Verschließen der Oberseite des Außenbehälters (1) mit Hilfe des ersten Deckels (15) in einer luftdichten Art und Weise.

23. Herstellungsverfahren für eine Getränkeherstellungskapsel nach Anspruch 22, **dadurch gekennzeichnet, dass** der Außenbehälter (1) mit Hilfe eines Verfahrens hergestellt wird, das aus Thermoformen und Spritzgießen ausgewählt ist.

## Revendications

1. Capsule de fabrication de boisson comprenant un premier couvercle (15) à travers lequel un fluide est injecté sous pression dans une première chambre d'air (19), dont le fond comprend des orifices (17) à travers lesquels est appliqué le fluide injecté vers une seconde chambre (20), contenant un produit alimentaire, et ledit fluide se mélange avec le produit alimentaire et la seconde chambre a un fond équipé de perforations (14) pour le passage du fluide mélangé avec le produit alimentaire vers une troisième chambre (21) équipée des séparations (18) sous la forme d'un labyrinthe pour ralentir le flux sortant du mélange du fluide avec ledit produit alimentaire ; comprenant après ladite chambre, un orifice de sortie (8) pour le mélange du fluide avec le produit alimentaire ; **caractérisée en ce qu'**elle comprend :
un récipient extérieur (1) ouvert par son côté supérieur et dont le fond (6) est équipé d'une ouverture centrale (7) en correspondance avec laquelle une extension définissant l'orifice de sortie (8) est comprise, et dont la configuration externe est adaptée à la cuvette d'une machine de fabrication de boissons ;
une micro-membrane (10) qui ferme l'ouverture (7) du fond (6) du récipient extérieur (1) d'une manière étanche à l'air, et ladite micro-membrane (10) comprend des fentes (11) dans sa surface pour favoriser sa cassure du fait de la pression du fluide injecté, permettant ainsi le passage du fluide mélangé avec le produit alimentaire vers l'orifice de sortie (8) ;
un récipient intérieur (12) formant la seconde chambre (20), qui est ouvert sur son côté supérieur, où le produit alimentaire est introduit et est enfermé au moyen d'un second couvercle (16), fixé sur la bordure ouverte du récipient intérieur (12) ; et ledit second couvercle (16) comporte des orifices (17) pour le passage du fluide injecté pour former le fond de la première chambre d'air (19), et laquelle la paroi latérale dudit récipient intérieur (12) est adaptée à la surface intérieure du récipient extérieur (1) dans lequel est fixé d'une manière étanche à l'air et non mobile ;
où le fond du récipient intérieur (12) et le fond (6) du récipient extérieur (1) forment une troisième chambre (21) avec les séparations (18) sous la forme d'un labyrinthe ; et
où lesdites séparations (18) sous la forme d'un labyrinthe sont agencées dans le côté extérieur du fond du récipient intérieur (12) ; donnant une série d'une seule pièce formée par le récipient intérieur conjointement avec les séparations (18), et ledit fond dudit récipient intérieur (12) comporte une pluralité de perforations (14) pour provoquer l'augmentation de la pression sur sa surface, et permettant le passage du fluide mélangé avec le produit alimentaire vers la troisième chambre (21), où la cassure de la micro-membrane (10) est produite en augmentant la pression.

2. Capsule de fabrication de boisson selon la revendication 1, **caractérisée en ce que** le récipient intérieur (12) comprend un rebord périphérique (13) sur lequel le second couvercle (16) est fixé, constituant le fond de la première chambre (19) après remplissage du récipient intérieur (12) avec le produit alimentaire ; et ledit récipient extérieur (1) comporte un degré périphérique (4) supportant ledit rebord périphérique (13) du récipient intérieur (12) sur lequel le second couvercle (16) est fixé.

3. Capsule de fabrication de boisson selon la revendication 1, **caractérisée en ce que** le récipient extérieur (1) comprend des nervures de support radial et de rigidification de capsule (9), latéralement à l'extension définissant l'orifice de sortie (8) et depuis la surface extérieure du fond, qui sont adaptées à la forme de la cuvette de la machine à laquelle il est couplé.

4. Capsule de fabrication de boisson selon la revendication 1, **caractérisée en ce que** les séparations (18) placées dans le côté extérieur du fond du récipient intérieur (12) sont agencées près du fond du récipient extérieur (1).

5. Capsule de fabrication de boisson selon la revendication 1, **caractérisée en ce que** le fond du récipient intérieur (12) et le fond du récipient extérieur (1), définissant la troisième chambre (21), comprennent une surface sélectionnée parmi une surface droite, conique et une combinaison de celles-ci.

6. Capsule de fabrication de boisson selon les revendications 2 ou 3, **caractérisée en ce que** le récipient extérieur (1) comprend une section conique supérieure (3) constituant la première chambre d'air (19), suivie par une section cylindrique (5) définissant le degré périphérique (4) supportant le rebord périphérique (13) du récipient intérieur (12), suivie par une petite chambre conique formant la troisième chambre (21), équipée des séparations (18) sous la forme d'un labyrinthe, qui se termine dans l'extension définissant l'orifice de sortie (8), ladite extension étant constituée par une section cylindrique.

7. Capsule de fabrication de boisson selon la revendication 5, **caractérisée en ce que** la troisième chambre (21) augmente progressivement en hauteur de l'extérieur vers l'intérieur.

8. Capsule de fabrication de boisson selon la revendication 1, **caractérisée en ce que** les séparations (18) sont agencées en formant une configuration sélectionnée parmi des cercles concentriques discontinus, dont les discontinuités se font face dans des cercles concentriques alternés ; et une configuration radiale.

9. Capsule de fabrication de boisson selon les revendications 5 et 8, **caractérisée en ce que** la longueur des séparations (18) diminue de l'extérieur vers l'intérieur et que leur hauteur augmente de l'extérieur vers l'intérieur.

10. Capsule de fabrication de boisson selon la revendication 1, **caractérisée en ce que** les perforations (14) du fond du récipient intérieur (12) comprennent une série de micro-perforations dans une configuration sélectionnée parmi des micro-cercles, des micro-troncs de cône, et des micro-troncs de pyramide et des micro-fentes.

11. Capsule de fabrication de boisson selon la revendication 1, **caractérisée en ce que** les perforations dans le fond du récipient intérieur (12) sont scellées au moyen d'une membrane textile avec un indice d'épaisseur élevé.

12. Capsule de fabrication de boisson selon les revendications 10 ou 11, **caractérisée en ce que** la série de perforations (14) ou de micro-perforations du fond du récipient intérieur (12) sont alignées en lignes radiales ou formant une grille.

13. Capsule de fabrication de boisson selon la revendication 1, **caractérisée en ce que** la série de perforations (17) du second couvercle (16) du récipient intérieur (12) sont agencées dans une position sélectionnée entre le centre, la zone près de l'extérieur et distribuées sur sa surface.

14. Capsule de fabrication de boisson selon la revendication 1, **caractérisée en ce que** la micro-membrane (10) est faite d'un matériau sélectionné parmi l'aluminium, le plastique, un polymère, du silicone, un matériau textile et un mamelon étanche à l'air avec une soupape d'ouverture pressurisée.

15. Capsule de fabrication de boisson selon la revendication 1, **caractérisée en ce que** la surface extérieure de la capsule comprend une rugosité ou des marques qui facilitent la préhension.

16. Capsule de fabrication de boisson selon la revendication 1, **caractérisée en ce que** le récipient extérieur (1) comprend un rebord périphérique (2) dans lequel le premier couvercle (15) est scellé thermiquement.

17. Capsule de fabrication de boisson selon la revendication 1, **caractérisée en ce que** l'intérieur de l'orifice de sortie (8) comprend des lames (22) provoquant un flux laminaire du fluide vers l'extérieur de l'orifice de sortie sous la forme d'une "queue de souris".

18. Capsule de fabrication de boisson selon la revendication 17, **caractérisée en ce que** les lames (22) présentent une configuration sélectionnée entre des ailettes radiales (22) et des sections (23) de séparations diamétrales (24) alternant orthogonalement dans la direction verticale, dont les bordures présentent des extensions horizontales (25) dans des directions opposées en chaque point milieu desdites bordures, sous la forme de degrés.

19. Capsule de fabrication de boisson selon la revendication 17, **caractérisée en ce que** les lames (22) forment une seul pièce avec l'orifice de sortie (8).

20. Capsule de fabrication de boisson selon la revendication 1, **caractérisée en ce que** l'orifice de sortie (8) présente un petit degré périphérique (26) dans son bord extérieur pour son couplage et sa stabilisation appropriés au niveau de la bordure de l'orifice inférieur de la cuvette de la machine correspondante.

21. Capsule de fabrication de boisson selon la revendication 1, **caractérisée en ce que** le matériau utilisé pour sa fabrication est sélectionné parmi des polymères, des composés plastiques, du carton plastifié, des matériaux métalliques ou une combinaison de ceux-ci.

22. Procédé de fabrication d'une capsule de fabrication de boisson selon l'une quelconque des revendications 1 à 18, dans lequel l'élaboration de la boisson comprend d'injecter sous pression un fluide dans une première chambre d'air (19) à travers un premier couvercle (15) de la capsule, lequel fond de la première chambre (19) comprend des orifices (17) à travers lesquels le fluide injecté est appliqué vers une seconde chambre (20) contenant un produit alimentaire, et ledit fluide se mélange avec le produit alimentaire dans ladite seconde chambre (20) ; et ladite seconde chambre (20) a un fond équipé de perforations (14) pour le passage du fluide mélangé avec ledit produit alimentaire vers une troisième chambre (21), équipée de séparations (18) sous la forme d'un labyrinthe pour ralentir le flux sortant du mélange du fluide avec le produit alimentaire ; comprenant après ladite troisième chambre (21) un orifice de sortie (8) pour le mélange du fluide avec le produit alimentaire ; **caractérisé en ce que** le procédé de fabrication comprend :
de fermer une ouverture centrale (7) du fond d'un récipient extérieur (1) d'une manière étanche à l'air au moyen d'une micro-membrane (10) pour réaliser la fermeture étanche à l'air de l'orifice de sortie (8) ;
de remplir un récipient intérieur (12), qui forme la seconde chambre (20) au moyen d'un produit ;
de fermer la bordure ouverte dudit récipient intérieur (12) au moyen d'un second couvercle (16), et ledit second couvercle (16) comporte des orifices (17) pour le passage du fluide injecté ;
d'introduire le récipient intérieur (12) dans le récipient extérieur (1), laquelle paroi latérale dudit récipient intérieur (12) s'adapte à la surface intérieure du récipient extérieur (1) ;
de fixer le récipient intérieur (12) d'une manière étanche à l'air et non mobile au moyen d'un joint supplémentaire à l'intérieur du récipient extérieur (1), formant le second couvercle (16) le fond de la première chambre d'air (19) ;
de fermer le côté supérieur du récipient extérieur (1) au moyen du premier couvercle (15) d'une manière étanche à l'air.

23. Procédé de fabrication d'une capsule de fabrication de boisson, selon la revendication 22, **caractérisé en ce que** le récipient extérieur (1) est fabriqué au moyen d'un procédé sélectionné parmi le thermoformage et l'injection.
